# EUROPÄISCHE PATENTSCHRIFT

(11) **EP 2 774 474 B1**
(45) Veröffentlichungstag und Bekanntmachung des Hinweises auf die Patenterteilung: **11.12.2019**
(21) Anmeldenummer: 14151742.5
(22) Anmeldetag: 20.01.2014
(51) Int. Cl.: A01F 7/04, A01D 41/127

(54) **Mähdrescher**
Combine harvester
Moissonneuse-batteuse

(30) Priorität: 08.03.2013 DE 102013102317
(43) Veröffentlichungstag der Anmeldung: 10.09.2014
(73) Patentinhaber: CLAAS Selbstfahrende Erntemaschinen GmbH, 33428 Harsewinkel (DE)
(72) Erfinder: Esken, Dirk, 59494 Soest-Meckingsen (DE); Schwersmann, Berthold, 49186 Bad Iburg (DE); Waten, Björn, 48231 Warendorf (DE); Joahnnesmann, Ralf, 33428 Harsewinkel (DE)
(74) Vertreter: CLAAS Gruppe

(56) Entgegenhaltungen:
- EP-A1- 1 491 082
- DE-A1- 4 035 471
- DE-B3- 10 359 398

## Beschreibung

Die vorliegende Erfindung betrifft einen Mähdrescher gemäß dem Oberbegriff des Anspruches 1 sowie ein Verfahren zum Betreiben eines Mähdreschers gemäß dem Oberbegriff des Anspruches 11.

Aus der DE 103 59 398 B3 ist ein Mähdrescher der eingangs genannten Art bekannt, welche eine als Schneidwerk ausgeführte Aufnahmevorrichtung für einen Mähdrescher bekannt, welche eine als Schneckenförderer ausgeführte Querfördereinrichtung umfasst, mit der aufgenommenes Erntegut einem Schrägförderer zugeführt wird. Der Schrägförderer leitet das Erntegut einem Mehrtrommeldreschwerk zur weiteren Verarbeitung zu. Oberhalb der Querfördereinrichtung sind mehrere verstellbare Gutleitelemente angeordnet, die der Vergleichmäßigung des an den Schrägförderer übergebenen Erntegutes dienen. Zu deren Ansteuerung ist eine Sensoreinrichtung mit Massenflusssensoren im Einzugskanal angeordnet, die in Abhängigkeit von der erfassten Erntegutverteilung im Schrägförderer die Stellung der Gutleitelemente an der Querfördereinrichtung verändern.

Die DE 40 35 471 A1 beschreibt einen Mähdrescher mit einer Drescheinrichtung, welche eine Dreschtrommel und einen unterhalb der Dreschtrommel angeordneten Dreschkorb. Unterhalb von Korbdrähten sind zwischen Leisten des Dreschkorbes Sensoren zur Erfassung von Erntegutdurchsatz angeordnet.

Aufgabe der vorliegenden Erfindung ist es, einen Mähdrescher der eingangs genannten Art derart weiterzuentwickeln, dass eine gleichmäßigere Gutverteilung in der Drescheinrichtung sowie dieser nachgelagerten Arbeitsorganen des Mähdreschers erreicht wird, sowie ein Verfahren zum Betreiben eines solchen Mähdreschers bereitzustellen.

Diese Aufgabe wird erfindungsgemäß durch die kennzeichnenden Merkmale des Anspruches 1 sowie bezüglich des Verfahrens durch die kennzeichnenden Merkmale des Anspruches 11 gelöst.

Vorteilhafte Weiterbildungen sind Gegenstand der Unteransprüche. Gemäß Anspruch 1 wird vorgeschlagen, dass der ersten Trommel der Drescheinrichtung zumindest eine sich über die Breite der Drescheinrichtung erstreckende Messleiste vorgelagert zugeordnet ist, die einen oder mehrere Sensoren zur Erfassung der Verteilung von Erntegut über die Breite der Drescheinrichtung aufweist. Die Anordnung der Messleiste in der Drescheinrichtung hat den Vorteil, dass die Verteilung des Erntegutes bei dessen Annahme und/oder während der Bearbeitung durch die Drescheinrichtung erfolgt und somit mögliche, auf die Gutverteilung im Dreschwerk einwirkende Einflüsse erfasst werden. Ein weiterer Vorteil besteht darin, dass die von den Trommeln der Drescheinrichtung auf den Erntegutstrom übertragene Beschleunigung deutlich höher ist, als im Schrägförderer, so dass die Ausgestaltung der verwendeten Messtechnik robuster gewählt werden kann, als bei ihrer aus dem Stand der Technik bekannten Anordnung im Schrägförderer, da hier eine höhere Empfindlichkeit der Messtechnik vonnöten ist. Die Anordnung in der Drescheinrichtung stellt sicher, dass frühzeitig eine sich einstellende Ungleichverteilung des von dem Mähdrescher aufgenommenen Erntegutes detektiert wird, um dieser durch geeignete Maßnahmen frühzeitig entgegenwirken zu können. Eine bestehende Ungleichverteilung des aufgenommenen Erntegutes lässt sich nach dem Passieren des Schrägförderers nicht in ausreichendem Maße ausgleichen, so dass auch die der Drescheinrichtung nachgeordneten Arbeitsaggregate wie die Abscheidung oder die Reinigung in gleicher Weise mit einer in quer zur Gutfluss- und Förderrichtung im Inneren des Mähdreschers gesehen ungleichmäßigen Erntegutmenge beschickt würden. Durch die frühzeitige Detektion einer etwaigen ungleichmäßigen Erntegutverteilung über die Breite der Drescheinrichtung wird diesem Umstand Rechnung getragen und entgegengewirkt.

Erfindungsgemäß ist die Messleiste unterhalb der ersten Trommel angeordnet. Die Anordnung unterhalb der ersten Trommel, die als Vorbeschleunigungstrommel ausgeführt ist, hat den Vorteil, dass die Sensoren der Messleiste geringeren mechanischen Belastung ausgesetzt sind, als bei einer Anordnung unterhalb der zweiten Trommel, die mit einer höheren Drehzahl rotiert, als die erste Trommel.

Erfindungsgemäß ist die Messleiste vor einem ersten, die erste als Vorbeschleunigertrommel ausgeführte Trommel abschnittsweise umschließenden Dreschkorb angeordnet.

Zusätzlich kann die Messleiste oberhalb der Drehachse der ersten Trommel angeordnet sein. Hierzu kann die Messleiste an einer Trommelklappe am Trommelgehäuse vor der ersten Trommel angeordnet sein. Diese Positionierung erlaubt die Erfassung des von den Trommeln in Umfangsrichtung mitgeführten Erntegutes, welches auf die Messleiste trifft. Auf diese Weise werden der so genannte Überwurf sowie dessen Querverteilung quantifizierbar, so dass geeignete Maßnahmen ableitbar sind, um den Überwurf zu reduzieren.

Vorteilhafterweise kann die Messleiste mehrere nebeneinander angeordnete, aus einem biegeelastischen Material bestehende Segmente umfassen.

Der mindestens einen Messleiste können Sensoren zur Erfassung der Verformung der Segmente zugeordnet sein. Hierzu können die Sensoren als Dehnungsmessstreifen ausgeführt sein, welche auf Grund der Deformation des jeweiligen Segmentes eine proportionale Änderung des elektrischen Widerstandes erfahren.

Bevorzugt können die Sensoren der mindestens einen Messleiste zur Erfassung von Druck eingerichtet sein. Bei dieser Ausführungsform können die Sensoren als Druckdosenaus geführt sein. Die Anwendung von Druckdosen ist von Vorteil, da sich diese durch eine hohe mechanische Belastbarkeit, eine hohe Ansprechempfindlichkeit sowie eine geringe Bauhöhe auszeichnen.

Alternativ können die Sensoren der mindestens einen Messleiste als berührungslos arbeitende Sensoren ausgeführt sein. Hierzu können die Sensoren als Näherungssensoren oder als Abstandssensoren ausgeführt sein.

In vorteilhafter Weiterbildung kann der Mähdrescher eine Regel- und Steuerungseinrichtung umfassen, welche von den Sensoren der mindestens einen Messleiste generierte Signale empfängt und auswertet.

Dabei kann die Regel- und Steuerungseinrichtung zur Regelung von an der Aufnahmevorrichtung befindlichen Aktoren eingerichtet sein. So lässt sich eine festgestellte ungleichmäßige Querverteilung bei der Zuführung von Erntegut in den Schrägförderer durch ein gezieltes Steuern oder Regeln von an der Aufnahmevorrichtung befindlichen, Querfördereinrichtungen wie eine geteilte Einzugsschnecke antreibenden Aktoren kompensieren.

Weiterhin kann die Regel- und Steuerungseinrichtung zur Regelung von den Schrägförderer antreibenden Aktoren eingerichtet sein. Hierzu kann der Schrägförderer in Förderrichtung gesehen mehrere unabhängig voneinander antreibbare Förderelemente aufweisen, deren Fördergeschwindigkeit in Abhängigkeit von der detektierten Erntegutverteilung in der Drescheinrichtung geregelt werden.

Des Weiteren kann die Regel- und Steuerungseinrichtung zur Regelung von die Drescheinrichtung betreibenden Aktoren eingerichtet sein. Insbesondere bei Überwurf können die Drehzahlen der Trommeln angepasst werden, um diesen zu reduzieren. Weiterhin lässt sich die Weite des Dreschspaltes, insbesondere in Abhängigkeit von der Erntegutverteilung, variieren, um bei ungleichmäßiger Erntegutverteilung den Körnerbruch zu reduzieren.

Weiterhin betrifft die vorliegende Erfindung ein Verfahren zum Betreiben eines Mähdreschers, umfassend eine Aufnahmevorrichtung für Erntegut, die an einem Schrägförderer des Mähdreschers anbringbar ist, sowie eine Drescheinrichtung mit einer ersten Trommel und einer zweiten Trommel, der das von der Aufnahmevorrichtung aufgenommene Erntegut zugeführt wird, nach einem der Ansprüche 11 bis 13.

Nach dem erfindungsgemäßen Verfahren wird mittels zumindest einer, der ersten Trommel der Drescheinrichtung vorgelagert angeordneten, sich über die Breite der Drescheinrichtung erstreckenden, mehrere Sensoren umfassenden Messleiste die Verteilung von Erntegut über die Breite der Drescheinrichtung erfasst, wobei die Messleiste vor einem ersten, die erste als Vorbeschleunigungstrommel ausgeführte Trommel abschnittsweise umschließenden Dreschkorb angeordnet ist, und wobei die von den Sensoren generierten Signale an eine Regel- und Steuerungseinrichtung zur Auswertung übertragen werden, und dass durch die Regel- und Steuerungseinrichtung Aktoren angesteuert werden, die dem Antrieb der Aufnahmevorrichtung, des Schrägförderers und der Drescheinrichtung dienen. Das erfindungsgemäße Verfahren ist dadurch gekennzeichnet, dass die Messleiste unterhalb der ersten Trommel angeordnet ist.

Weiterhin können durch die Regel- und Steuerungseinrichtung die Arbeitsparameter von der Drescheinrichtung nachgelagerten Arbeitsaggregaten in Abhängigkeit von der in der Drescheinrichtung erfassten Erntegutverteilung gesteuert oder geregelt werden. Die Steuerung beziehungsweise Regelung von der Drescheinrichtung nachgelagerten Arbeitsaggregaten erlaubt es, die Auswirkungen einer ungleichmäßigen Erntegutverteilung über die Arbeitsbreite der nachgelagerten Arbeitsaggregate zu reduzieren.

So können als der Drescheinrichtung nachgelagerte Arbeitsaggregate eine Abscheidevorrichtung, ein Gebläse einer Reinigungseinrichtung sowie eine Erntegutverteileinrichtung zur Ausbringung von Erntegut auf den Boden gesteuert oder geregelt werden. Hierzu kann bei einer als Axialtrennrotor ausgebildeten Abscheidevorrichtung die Verteilung der Gutabgabe an eine nachgeordnete Reinigungseinrichtung variiert werden, um eine ungleichmäßige Verteilung des von der Drescheinrichtung an die Reinigungseinrichtung abgegebenen Erntegutes zu kompensieren, wodurch eine gleichmäßigere Auslastung der Reinigungseinrichtung erreichbar ist. Eine weitere Möglichkeit bestünde darin, dass die Erntegutverteilung auf einem unterhalb der als Hordenschüttler oder Axialtrennrotor ausgeführten Abscheidevorrichtung angeordneten Rücklaufboden, durch auf dem Rücklaufboden befindliche Leitelemente beeinflusst wird, um eine Vergleichmäßigung des an der Reinigungseinrichtung zugeführten Erntegutstroms zu erreichen. Des Weiteren kann in Abhängigkeit von der im Dreschwerk erfassten Erntegutverteilung das Reinigungsgebläse entsprechend angesteuert werden, um das der Reinigungseinrichtung zugeführte Erntegut entsprechend seiner Verteilung auf den Sieben der Reinigungseinrichtung mit unterschiedlichen Luftströmen zu beaufschlagen. Darüber hinaus kann in Abhängigkeit von der erfassten Erntegutverteilung in der Drescheinrichtung eine vorzugsweise als mit zumindest zwei aktiv angetriebene Radialverteilern ausgeführte Strohverteileinrichtung angesteuert werden, um eine Vergleichmäßigung des von der Strohverteileinrichtung auf den Boden ausgebrachten Strohs zu erreichen. Hierzu können die Drehzahlen sowie an den Radialverteilern vorgesehene, in Umfangsrichtung verstellbare Leitelemente der mindestens zwei Radialverteiler derart angesteuert werden, dass eine Umverteilung des Erntegutes bei dessen Abgabe aus den Radialverteilern erfolgt.

Die vorliegende Erfindung wird anhand von in den Figuren dargestellten Ausführungsbeispielen näher erläutert.

Es zeigen:
- Fig.1: einen schematischen Querschnitt durch einen Mähdrescher;
- Fig. 2: eine perspektivische Teilansicht eines Trommelhauses eines Mähdreschers;
- Fig. 3: eine perspektivische Ansicht einer Drescheinrichtung mit einer Messleiste;
- Fig.4: eine perspektivische Ansicht einer Drescheinrichtung gemäß Fig. 3 mit einer zweiten Messleiste.

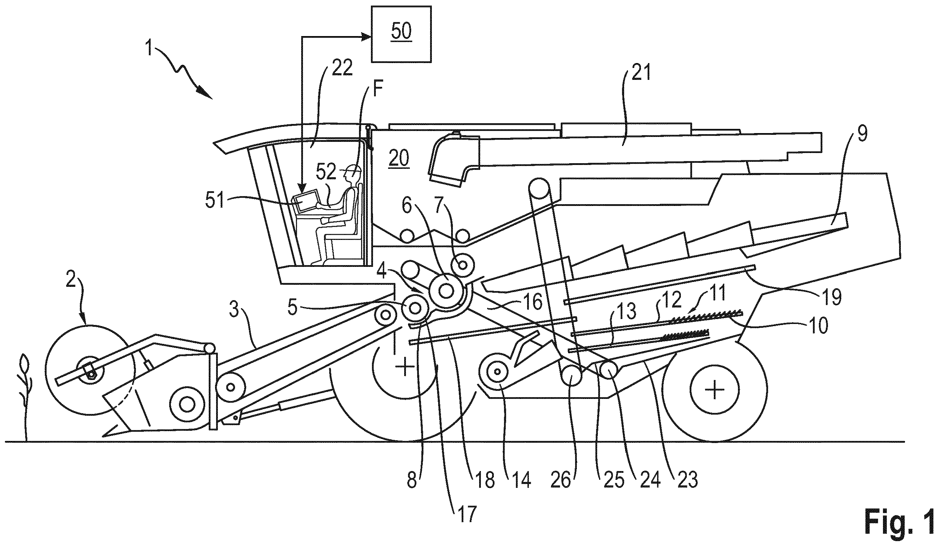

In Fig. 1 ist ein selbstfahrender Mähdrescher 1 mit einer nach dem Tangentialflussprinzip arbeitenden Drescheinrichtung 4 und einem dahinter angeordneten Schüttler 9 als Abscheideeinrichtung dargestellt. Anstelle des Schüttlers 9 kann auch eine nach dem Axialflussprinzip arbeitende Abscheideeinrichtung in Form zumindest eines Abscheiderotors zur Anwendung kommen. Unterhalb des Schüttlers 9 befindet sich eine Reinigungseinrichtung 11, bestehend aus zwei übereinander angeordneten Sieben 12, 13 und einem Gebläse 14.

Erntegut wird zunächst von einer als Schneidwerk 2 ausgeführten Aufnahmevorrichtung aufgenommen, welches das Erntegut einem Schrägförderer 3 zuführt, an dem das Schneidwerk 2 angeordnet ist. Der Schrägförderer 3 übergibt das Erntegut an die entgegen dem Uhrzeigersinn rotierenden Dreschorgane 5, 6, 7 der Drescheinrichtung 4. Dabei wird das aus dem Schrägförderer 3 kommende Erntegut zunächst durch eine Vorbeschleunigertrommel 5 erfasst und weiter von einer Dreschtrommel 6 durch den Dreschspalt 17 gezogen, der durch den Abstand zwischen der Vorbeschleunigertrommel 5 beziehungsweise der Dreschtrommel 6 zu dem darunter angeordneten Dreschkorb 8 gegeben ist. Dabei bearbeitet die Dreschtrommel 6 das Erntegut mechanisch, infolgedessen ein Korn-Spreu-Gemisch am Dreschkorb 8 abgeschieden wird, welches über einen Vorbereitungsboden 18 der Reinigungseinrichtung 11 zugeführt wird. In der Reinigungseinrichtung 11 werden die Körner von den Nicht-Kornbestandteilen, das heißt von Spreu- und Strohteilen, getrennt. Von der Drescheinrichtung 4 gelangt der im Wesentlichen aus ausgedroschenen Halmen bestehende Restgutstrom dann über die Wendetrommel 7 auf den Hordenschüttler 9, der den Restgutstrom in den rückwärtigen Bereich des Mähdreschers 1 fördert. Dabei werden die noch im Restgutstrom befindlichen Körner sowie eventuelles Kurzstroh und Spreu abgetrennt, indem sie durch den mit Sieböffnung versehenen Hordenschüttler 9 hindurch auf einen Rücklaufboden 19 fallen. Der Rücklaufboden 19 transportiert die Körner, das Kurzstroh und die Spreu zum Vorbereitungsboden 18 zurück.

Die Körner, das Kurzstroh und die Spreu gelangen über den Vorbereitungsboden 18 ebenfalls zur Reinigungseinrichtung 11, in welcher die Körner vom Kurzstroh und Spreu getrennt werden. Die Reinigung erfolgt in der Weise, dass durch die Sieböffnungen in dem Obersieb 12 und in dem Untersieb 13 mittels des Gebläses 14 Wind hindurchgefördert wird, welcher das über die Siebe 12, 13 in den hinteren Bereich des Mähdreschers 1 geführte Erntegut auflockert und für das Heraustrennen der spezifisch leichteren Spreu- und Kurzstrohanteile sorgt, während die schwereren Erntegutkörner durch die Sieböffnungen fallen. Die Siebe 12, 13 sind teilweise übereinander angeordnet, so dass das Erntegut in zwei verschiedenen Stufen unterschiedlich fein gesiebt wird, wobei die Maschenweite der Siebe 12, 13 veränderbar ist. Der Siebdurchgang, der sich im Überkehrbereich 10, das heißt im hinteren Bereich des Obersiebes 12, befindet, welcher nicht mehr über dem Untersieb 13 liegt, und durch das Obersieb 12 fällt, sowie der Siebüberlauf am Ende des Untersiebs 13 enthalten in der Regel schwerere Teilchen, das heißt beispielsweise unausgedroschene Ähren. Dieser Erntegutanteil wird nachfolgend als Überkehr-Erntegutmenge bezeichnet. Die Überkehr-Erntegutmenge fällt auf einen schräg verlaufenden Auffangboden 23 unterhalb der Reinigungseinrichtung 11 und gleitet in eine Ährenförderschnecke 24. Die Ährenförderschnecke 24 fördert die Überkehr-Erntegutmenge in einen Überkehrelevator 16, der sie erneut der Drescheinrichtung 4 zuführt. Der Siebüberlauf, der nicht durch das Obersieb 31 hindurchfällt, wird im oberen Bereich des Mähdreschers 1 als Reinigungsverlust ausgeworfen. Das Stroh sowie ein bestimmter Prozentsatz an Verlustkörnern wandern über den Hordenschüttler 9 zum hinteren Ende des Mähdreschers 1 und werden dort als Abscheideverlust ausgeworfen.

Die Körner, welche durch beide Siebe 12, 13 der Reinigungsvorrichtung 11 gelangen, fallen auf einen weiteren schräg verlaufenden Auffang- und Führungsboden 25 und gleiten in eine Kornförderschnecke 26, die die Körner einem Kornelevator 15 zuführt. Sie werden dann von dem Kornelevator 15 in einen Korntank 20 des Mähdreschers 1 befördert und können dort bei Bedarf mit einer Korntankentleervorichtung 21 auf einen Transportwagen umgeladen werden.

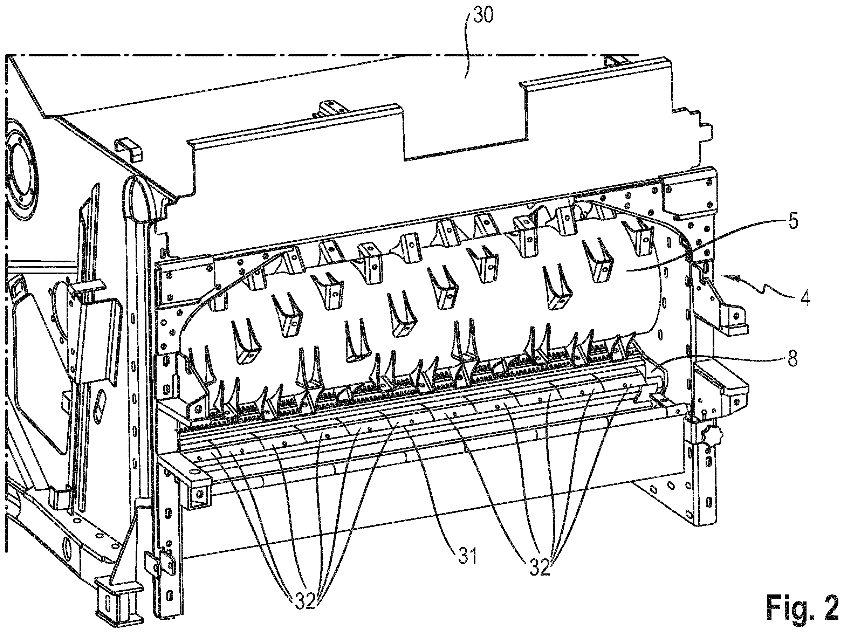

In Fig. 2 ist ein die Drescheinrichtung 4 umgebendes Trommelhaus 30 in einer Teilansicht dargestellt. In dieser Darstellung wurde aus Vereinfachungsgründen auf die Darstellung der der Vorbeschleunigungstrommel 5 nachfolgenden Dreschtrommel 6 und Wendetrommel 7 verzichtet. Ebenfalls in dieser Ansicht nicht dargestellt ist der der Öffnung des Trommelhauses 30 vorangestellte Schrägförderer 3, der das von der als Schneidwerk 2 ausgeführten Aufnahmevorrichtung aufgenommene Erntegut der Drescheinrichtung 4 zuführt. Unterhalb der Vorbeschleunigungstrommel 5 ist achsparallel zu dieser eine Messleiste 31 angeordnet, welche sich über die Breite der Drescheinrichtung 4 erstreckt. Die Messleiste 31 umfasst eine Vielzahl von nebeneinander angeordneten Segmenten 32, die jeweils aus einem biegeelastischen, verschleißfesten Material bestehen. Das von dem Schrägförderer 3 der Drescheinrichtung 4 zugeführte Erntegut erfährt durch die Vorbeschleunigungstrommel 5 eine Beschleunigung, so dass das Erntegut gegen die jeweiligen Segmente 32 der Messleiste 31 gepresst wird. Die daraus resultierende Deformation des jeweiligen Segmentes 32 wird sensorisch erfasst. Der Grad der Deformation eines jeden Segmentes 32 variiert in Abhängigkeit von der Verteilung der Erntegutmenge über dessen Zuführbreite, dass heißt der Öffnungsweite des Trommelhauses 30. Ein die Deformation des jeweiligen Segmentes 32 repräsentierendes Signal wird an zumindest eine der selbstfahrenden Mähdrescher 1 zugeordnete Steuer- und Regelungseinrichtung 50 weitergeleitetet, die diese Signale auswertet. An die Steuer- und Regelungseinrichtung 50 sind eine Anzeigeeinheit 51 und eine Eingabeeinheit 52 angeschlossen. Auf diese Weise lassen sich Aussagen über die Querverteilung des Erntegutes ableiten. Die Steuer- und Regelungseinrichtung 50 kann auch dezentralisiert aus mehreren, den einzelnen Arbeitsorganen zugeordneten Einheiten bestehen, die jeweils mit einer übergeordneten Anzeige-, Bedien-, Eingabe-und Regelungsvorrichtung über ein gemeinsames Bussystem in Verbindung stehen. Als Sensoren können auf der dem Erntegutstrom abgewandten Unterseite der Segmente 32 als Druckdosen ausgebildete Sensoren angeordnet sein.

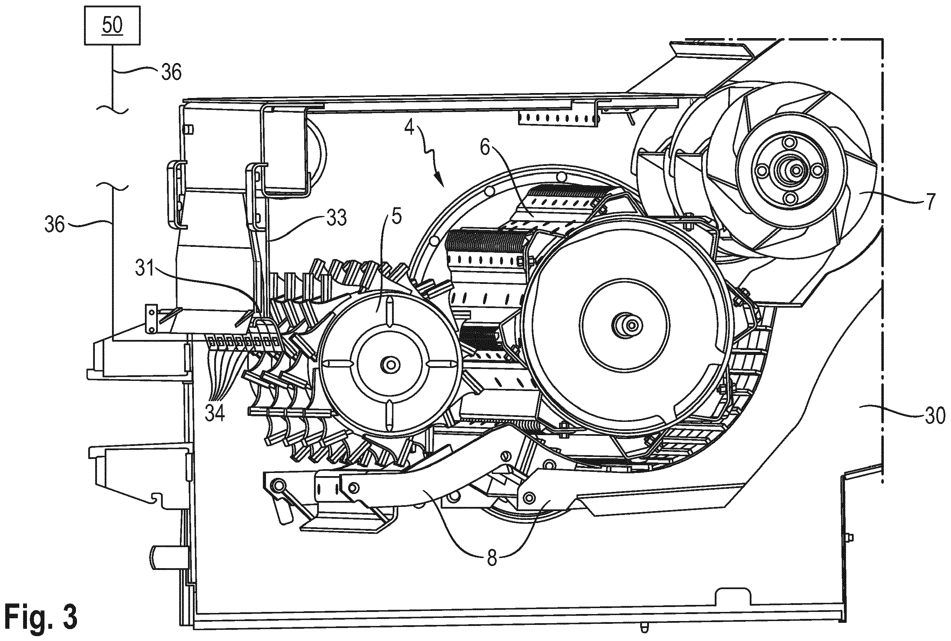

Die Darstellung in Fig. 3 zeigt eine zusätzliche Anordnung der Messleiste 31. Bei dieser Variante ist die Messleiste 31 oberhalb der Drehachse der Vorbeschleunigungstrommel 5 an der der Vorbeschleunigungstrommel 5 zugewandten Innenseite des Trommelhauses 30 angeordnet. Bei dieser Anordnung trifft von der Vorbeschleunigungstrommel 5 beziehungsweise von der Dreschtrommel 6 in Rotationsrichtung mitgeführtes Erntegut auf die Messleiste 31. Das Trommelhaus 30 weist eine Trommelklappe 33 auf, an der die Messleiste 31 vorzugsweise angeordnet ist. Die Messleiste 31 erstreckt sich auch bei dieser Positionierung achsparallel zu der Vorbeschleunigungstrommel 5 über die Breite des Trommelhauses 30. Das Wirkprinzip ist identisch mit dem zuvor beschriebenen, auch in diesem Fall wird die unterschiedliche Deformation der einzelnen Segmente 32 sensorisch erfasst und das die Deformation des jeweiligen Segmentes 32 repräsentierende Signal von der Steuer- und Regelungseinrichtung 50 ausgewertet. In dem in Fig. 3 dargestellten Ausführungsbeispiel ist auf der dem Erntegutfluss abgewandten Seite des jeweiligen Segmentes 32 auf jedem ein Dehnungsmessstreifen 34 angeordnet, welche auf Grund der durch das auf das jeweilige Segment 32 auftreffende Erntegut hervorgerufenen Deformation eine Änderung ihres Widerstandes erfahren. Die Größenordnung der Änderung des Widerstandes des jeweiligen Dehnungsmessstreifens 34 dient als Maß für die Deformation und damit der Quantifizierung der Überwurfmenge.

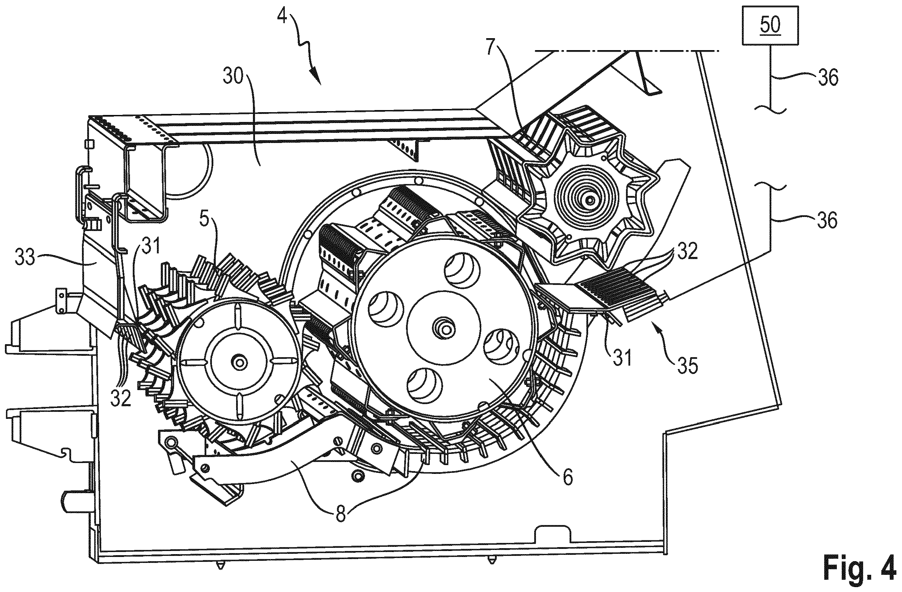

In Fig. 4 ist eine zusätzliche Möglichkeit einer zusätzlichen Anordnung der Messleiste 31 dargestellt. Bei dieser Ausführung ist es vorgesehen, eine Messleiste 31 im Abgabebereich der Dreschtrommel 6, unterhalb der Wendetrommel 7 anzuordnen. Diese Anordnung kann zusätzlich zu der in Fig. 2 beschriebenen Anordnung vorgesehen werden. Auch bei dieser Anordnung entspricht das Wirkprinzip dem bereits beschriebenen, so dass auf eine erneute Wiederholung verzichtet wird. Bei diesem Ausführungsbeispiel sind die Sensoren als berührungslos arbeitende Näherungs- oder Abstandssensoren 35 ausgebildet, die über eine oder mehrere Leitungen 36 mit der Steuer- und Regelungseinrichtung 50 in Wirkverbindung stehen.

Die jeweilige Anordnung der Messleiste 31 erlaubt es unterschiedliche Informationen über die Erntegutverteilung und den Gutfluss des Erntegutes innerhalb der Drescheinrichtung 4 zu erfassen und auszuwerten. Die Anordnung der Messleiste 31 gemäß Fig. 2 lässt Rückschlüsse auf die Gutaufnahme durch das Schneidwerk 2 und die anschließende Beschickung des Schrägförderers 3 durch das Schneidwerk 2 zu. Ein weiterer Vorteil dieser Positionierung der Messleiste 31 besteht darin, dass die von der Vorbeschleunigungstrommel 5 auf das Erntegut ausgeübten Kräfte auf Grund der gegenüber der nachgeordneten Dreschtrommel 6 niedrigeren Antriebsdrehzahl weniger Verschleiß bedeuten. Trotz der geringeren auf das Erntegut einwirkenden Kräfte lässt sich die Erntegutverteilung über die Breite des Trommelhauses 30 bei der Annahme durch die Vorbeschleunigungstrommel 5 eindeutig erfassen. Die ergänzende Anordnung der Messleiste 31 an der der Vorbeschleunigungstrommel 5 zugewandten Innenseite des Trommelhauses 30 erlaubt die quantitative Erfassung des Überwurfes von Erntegut, insbesondere durch die Dreschtrommel 6, sowie dessen Querverteilung. Mit der ausgangsseitigen Anordnung der Messleiste 31 im Abgabebereich der Dreschtrommel 6, unterhalb der Wendetrommel 7, lässt sich ebenfalls die Erntegutverteilung über die Breite der Drescheinrichtung 4 ermitteln. Der Vorteil dieser Anordnung besteht gleichfalls darin, dass der Verschleiß, der an den Segmenten 32 der Messleiste 31 auftritt, auf Grund der niedrigeren Drehzahl der Wendetrommel 7 geringer ausfällt.

Als Mittel zur Detektion der Verformung der einzelnen Segmente 32 durch das Erntegut können beispielsweise Dehnungsmessstreifen auf der dem Erntegut abgewandten Seite der jeweiligen Segmente 32 angeordnet sein. Das von den Dehnungsmessstreifen generierte elektrische Signal wird an die Steuer- und Regelungseinrichtung 50 übertragen und von dieser ausgewertet. Anstelle von Dehnungsmessstreifen können auch Druckdosen eingesetzt werden, welche die physische Verformung des jeweiligen Segmentes 32 erfassen und ein korrespondierendes Signal an die Steuer- und Regelungseinrichtung 50 weiterleiten.

Alternativ kann eine berührungslose Erfassung der Deformation des jeweiligen Segmentes 32 durch Abstands - oder Näherungssensoren 35 erfolgen, die den einzelnen Segmenten 32 unterhalb der Messleiste, das heißt auf der dem Erntegut abgewandten Seite, zugeordnet sind, wie in Fig. 4 angedeutet.

Die Auswertung der Sensorsignale erfolgt, wie bereits geschildert, durch die Steuer- und Regelungseinrichtung 50. Das Detektieren einer ungleichmäßigen Erntegutzuführung und -verteilung in die Drescheinrichtung 4 führt dazu, dass seitens der Steuer- und Regelungseinrichtung 50 Maßnahmen abgeleitet werden, um der ungleichmäßigen Zuführung von Erntegut entgegenzuwirken. Beispielsweise können bei einem Schneidwerk 2, welches mit einer geteilten Einzugsschnecke ausgestattet ist, die Antriebsdrehzahlen der jeweiligen Einzugsschnecke in Abhängigkeit von der detektierten Erntegutverteilung geregelt werden, um eine Vergleichmäßigung der Gutverteilung vor dessen Zuführung in die Drescheinrichtung 4 zu erreichen. Des Weiteren können die Drehzahlen der Vorbeschleunigungstrommel 5, der Dreschtrommel 6 sowie der Wendetrommel 7 geregelt werden, um einen detektierten Überwurf zu minimieren. Eine Beeinflussung der Erntegutverteilung ließe sich auch dadurch erreichen, dass der Schrägförderer 3 über seine Bereite gesehen mehrere unabhängig voneinander antreibbare Förderelemente aufweist, deren Fördergeschwindigkeit in Abhängigkeit von der detektierten Erntegutverteilung geregelt werden.

Einhergehend mit der Regelung des Schneidwerkes 2 und/oder des Schrägförderers 3 ließe sich auch die Weite des Dreschspaltes 17 zwischen der Dreschtrommel 6 und dem Dreschkorb 8 regeln, um diesen bei einer detektierten ungleichmäßigen Erntegutverteilung über die Breite des Drescheinrichtung 4 zu variieren, um Körnerbruch zu reduzieren, während parallel am Schneidwerk 2 eingeleitete Maßnahmen zur Vergleichmäßigung der Erntegutverteilung eingeleitet werden.

Insbesondere ließe sich die die Weite des Dreschspaltes 17 zwischen der Dreschtrommel 6 und dem Dreschkorb 8 in Abhängigkeit von der Erntegutverteilung regeln. Der Dreschkorb 8 ist beidseitig durch Hydraulikzylinder betätigbar, so dass eine ungleichmäßige Beabstandung beziehungsweise Weite des Dreschspaltes 17 einstellbar ist. Entsprechend einer festgestellten ungleichmäßigen Erntegutverteilung über die Breite der Drescheinrichtung 4 kann der Dreschspalt 17 auf der Seite der Dreschtrommel 6, auf der mehr Erntegut detektiert wurde, größer gewählt werden, als auf der anderen Seite, auf der der Anteil an Erntegut geringer ist. Hierdurch lässt sich der Anteil an Körnerbruch reduzieren.

**Bezugszeichenliste**

| | | | |
|---|---|---|---|
| **1** | Mähdrescher | **30** | Trommelhaus |
| **2** | Schneidwerk | **31** | Messleiste |
| **3** | Schrägförderer | **32** | Segment |
| **4** | Drescheinrichtung | **33** | Trommelklappe |
| **5** | Vorbeschleunigungstrommel | **34** | Dehnungsmessstreifen |
| **6** | Dreschtrommel | **35** | Näherungssensor |
| **7** | Wendetrommel | **36** | Leitung |
| **8** | Dreschkorb | | |
| **9** | Hordenschüttler | **50** | Steuer- und Regelungseinrichtung |
| **10** | Überkehrbereich | **51** | Anzeigeeinheit |
| **11** | Reinigungseinrichtung | **52** | Eingabeeinheit |
| **12** | Sieb | | |
| **13** | Sieb | | |
| **14** | Gebläse | | |
| **15** | Kornelevator | | |
| **16** | Überkehrelevator | | |
| **17** | Dreschspalt | | |
| **18** | Vorbereitungsboden | | |
| **19** | Rücklaufboden | | |
| **20** | Korntank | | |
| **21** | Korntankentleervorichtung | | |
| **22** | Fahrerkabine | | |
| **23** | Auffangboden | | |
| **24** | Überkehrförderschnecke | | |
| **25** | Auffang- und Förderboden | | |
| **26** | Kornförderschnecke | | |
| **27** | | | |
| **28** | | | |
| **29** | | | |

## Patentansprüche

1. Mährescher (1), umfassend eine Aufnahmevorrichtung (2) für Erntegut, die an einem Schrägförderer (3) des Mähdreschers (1) anbringbar ist, sowie eine Drescheinrichtung (4) mit einer ersten Trommel (5) und einer zweiten Trommel (6), der das von der Aufnahmevorrichtung (2) aufgenommene Erntegut zugeführt wird, wobei der ersten Trommel (5) der Drescheinrichtung (4) zumindest eine sich über die Breite der Drescheinrichtung (4) erstreckende Messleiste (31) vorgelagert zugeordnet ist, die einen oder mehrere Sensoren (34, 35) zur Erfassung der Verteilung von Erntegut über die Breite der Drescheinrichtung (4) aufweist, wobei die Messleiste (31) vor einem ersten, die erste als Vorbeschleunigungstrommel ausgeführte Trommel (5) abschnittsweise umschließenden Dreschkorb (8) angeordnet ist, **dadurch gekennzeichnet, dass** die zumindest eine Messleiste (31) unterhalb der ersten Trommel (5) angeordnet ist.

2. Mähdrescher (1) nach Anspruch 1, **dadurch gekennzeichnet, dass** eine Messleiste (31) zusätzlich oberhalb der Drehachse der ersten Trommel (5) angeordnet ist.

3. Mähdrescher (1) nach einem der Ansprüche 1 bis 2, **dadurch gekennzeichnet,**
**dass** die Sensoren (34) der mindestens einen Messleiste (31) zur Erfassung von Druck eingerichtet sind.

4. Mähdrescher (1) nach einem der Ansprüche 1 bis 2, **dadurch gekennzeichnet,**
**dass** die Sensoren (34, 35) der mindestens einen Messleiste (31) als berührungslos arbeitende Sensoren ausgeführt sind.

5. Mähdrescher (1) nach einem der Ansprüche 1 bis 2, **dadurch gekennzeichnet,**
**dass** die Messleiste (31) mehrere nebeneinander angeordnete, aus einem biegeelastischen Material bestehende Segmente (32) umfasst, denen jeweils ein Sensor (34, 35) zur Erfassung der Verformung des jeweiligen Segmentes (32) zugeordnet ist.

6. Mähdrescher (1) nach einem der Ansprüche 1 bis 5, **dadurch gekennzeichnet, dass** der Mähdrescher (1) zumindest eine Regel- und Steuerungseinrichtung (50) umfasst, welche von den Sensoren (34, 35) der mindestens einen Messleiste (31) generierten Signale empfängt und auswertet.

7. Mähdrescher (1) nach Anspruch 6, **dadurch gekennzeichnet, dass** die Regel- und Steuerungseinrichtung (50) zur Ansteuerung von an der Aufnahmevorrichtung (2) befindlichen Aktoren eingerichtet ist.

8. Mähdrescher (1) nach einem der Ansprüche 6 oder 7, **dadurch gekennzeichnet, dass** die Regel- und Steuerungseinrichtung (50) zur Ansteuerung von den Schrägförderer (3) antreibenden Aktoren eingerichtet ist.

9. Mähdrescher (1) nach einem der Ansprüche 6 bis 8, **dadurch gekennzeichnet, dass** die Regel- und Steuerungseinrichtung (50) zur Ansteuerung von die Drescheinrichtung (4) betreibenden Aktoren eingerichtet ist.

10. Mähdrescher (1) nach einem der Ansprüche 6 bis 9, **dadurch gekennzeichnet, dass** die Regel- und Steuerungseinrichtung (50) zur Veränderung der Weite des Dreschspaltes (17) in Abhängigkeit von der Erntegutverteilung eingerichtet ist.

11. Verfahren zum Betreiben eines Mähdreschers (1) nach einem der Ansprüche 1 bis 10, umfassend eine Aufnahmevorrichtung (2) für Erntegut, die an einem Schrägförderer (3) des Mähdreschers (1) anbringbar ist, sowie eine Drescheinrichtung (4) mit einer ersten Trommel (5) und einer zweiten Trommel (6), der das von der Aufnahmevorrichtung (2) aufgenommene Erntegut zugeführt wird, wobei mittels zumindest einer der ersten Trommel (5) der Drescheinrichtung (4) vorgelagert angeordneten, sich über die Breite der Drescheinrichtung (4) erstreckenden, mehrere Sensoren (34, 35) umfassenden Messleiste (31) die Verteilung von Erntegut über die Breite der Drescheinrichtung (4) erfasst wird, wobei die Messleiste (31) vor einem ersten, die erste als Vorbeschleunigungstrommel ausgeführte Trommel (5) abschnittsweise umschließenden Dreschkorb (8) angeordnet ist, und wobei die von den Sensoren (34, 35) generierten Signale an mindestens eine Regel- und Steuerungseinrichtung (50) zur Auswertung übertragen werden, und dass durch die mindestens eine Regel- und Steuerungseinrichtung (50) Aktoren angesteuert werden, die dem Betrieb der Aufnahmevorrichtung (2), des Schrägförderers (3) und der Drescheinrichtung (4) dienen, **dadurch gekennzeichnet, dass** die Messleiste (31) unterhalb der ersten Trommel (5) angeordnet ist.

12. Verfahren nach Anspruch 11, **dadurch gekennzeichnet, dass** durch die Regel- und Steuerungseinrichtung (50) die Arbeitsparameter von der Drescheinrichtung (4) nachgelagerten Arbeitsaggregate in Abhängigkeit von der in der Drescheinrichtung (4) erfassten Erntegutverteilung gesteuert oder geregelt werden.

13. Verfahren nach Anspruch 12, **dadurch gekennzeichnet, dass** als der Drescheinrichtung (4) nachgelagerten Arbeitsaggregate eine Abscheidevorrichtung (9), ein Gebläse (14) einer Reinigungseinrichtung (11) sowie eine Erntegutverteileinrichtung zur Ausbringung von Erntegut auf den Boden gesteuert oder geregelt werden.

## Claims

1. A combine harvester (1) including a pick-up device (2) for crop material, which can be mounted to an inclined conveyor (3) of the combine harvester (1), and a threshing device (4) having a first drum (5) and a second drum (6) to which the crop material picked up by the pick-up device (2) is fed, wherein associated with the first drum (5) of the threshing device in front thereof is a measuring bar (31) which extends over the width of the threshing device (4) and which has one or more sensors (34, 35) for detecting the distribution of crop material over the width of the threshing device (4), wherein the measuring bar (31) is arranged in front of a first threshing concave (8) which portion-wise encloses the first drum (5) which is in the form of a pre-acceleration drum, **characterised in that** the at least one measuring bar (31) is arranged beneath the first drum (5).

2. A combine harvester (1) according to claim 1 **characterised in that** a measuring bar (31) is additionally arranged above the axis of rotation of the first drum (5).

3. A combine harvester (1) according to one of claims 1 and 2 **characterised in that** the sensors (34) of the at least one measuring bar (31) are adapted to detect pressure.

4. A combine harvester (1) according to one of claims 1 and 2 **characterised in that** the sensors (34, 35) of the at least one measuring bar (31) are in the form of contactlessly operating sensors.

5. A combine harvester (1) according to one of claims 1 and 2 **characterised in that** the measuring bar (31) includes a plurality of mutually juxtaposed segments (32) which comprise a flexurally elastic material and with each of which is associated a respective sensor (34, 35) for detecting the deformation of the respective segment (32).

6. A combine harvester (1) according to one of claims 1 to 5 **characterised in that** the combine harvester (1) includes at least one closed-loop and open-loop control device (50) which receives and evaluates signals generated by the sensors (34, 35) of the at least one measuring bar (31).

7. A combine harvester (1) according to claim 6 **characterised in that** the closed-loop and open-loop control device (50) is adapted to actuate actuators disposed on the pick-up device (2).

8. A combine harvester (1) according to one of claims 6 and 7 **characterised in that** the closed-loop and open-loop control device (50) is adapted to actuate actuators driving the inclined conveyor (3).

9. A combine harvester (1) according to one of claims 6 to 8 **characterised in that** the closed-loop and open-loop control device (50) is adapted to actuate actuators operating the threshing device (4).

10. A combine harvester (1) according to one of claims 6 to 9 **characterised in that** the closed-loop and open-loop control device (50) is adapted to change the width of the threshing gap (17) in dependence on the crop material distribution.

11. A method of operating a combine harvester (1) according to one of claims 1 to 10 including a pick-up device (2) for crop material, which can be mounted to an inclined conveyor (3) of the combine harvester (1), and a threshing device (4) having a first drum (5) and a second drum (6) to which the crop material picked up by the pick-up device (2) is fed, wherein the distribution of crop material over the width of the threshing device (4) is detected by means of a measuring bar (31) which is arranged mounted in front of the first drum (5) of the threshing device (4) and extends over the width of the threshing device (4) and includes a plurality of sensors (34, 35), wherein the measuring bar (31) is arranged in front of a first threshing concave (8) which portion-wise encloses the first drum (5) which is in the form of a pre-acceleration drum and wherein the signals generated by the sensors (34, 35) are transmitted to at least one closed-loop and open-loop control device (50) for evaluation, and that actuators which serve to operate the pick-up device (2), the inclined conveyor (3) and the threshing device (4) are actuated by the at least one closed-loop and open-loop control device (50), **characterised in that** the measuring bar (31) is arranged beneath the first drum (5).

12. A method according to claim 11 **characterised in that** the working parameters of working assemblies mounted downstream of the threshing device (4) are open-loop or closed-loop controlled by the closed-loop and open-loop control device (50) in dependence on the crop material distribution detected in the threshing device (4).

13. A method according to claim 12 **characterised in that** a separating device (9), a fan (14) of a cleaning device (11) and a crop material distribution device for discharging crop material on to the ground are open-loop or closed-loop controlled as working assemblies mounted downstream of the threshing device (4).

## Revendications

1. Moissonneuse-batteuse (1) comprenant un dispositif de ramassage (2) pour du produit récolté, lequel peut être monté sur un convoyeur incliné (3) de la moissonneuse-batteuse (1), ainsi que comprenant un équipement de battage (4) avec un premier batteur (5) et un second batteur (6), auquel le produit récolté ramassé par le dispositif de ramassage (2) est amené, au premier batteur (5) de l'équipement de battage (4) étant associée en amont au moins une barrette de mesure (31) qui s'étend sur la largeur de l'équipement de battage (4) et qui comporte un ou plusieurs capteurs (34, 35) pour détecter la répartition du produit récolté sur une largeur de l'équipement de battage (4), la barrette de mesure (31) étant disposée devant un premier contre-batteur (8) entourant par endroits le premier batteur (5) conformé en tambour de pré-accélération, **caractérisée en ce que** la au moins une barrette de mesure (31) est disposée au-dessous du premier batteur (5).

2. Moissonneuse-batteuse (1) selon la revendication 1, **caractérisée en ce que**, en plus, une barrette (31) de mesure est disposée au-dessus de l'axe de rotation du premier batteur (5).

3. Moissonneuse-batteuse (1) selon une des revendications 1 à 2, **caractérisée en ce que** les capteurs (34) de la au moins une barrette de mesure (31) sont agencés pour détecter une pression.

4. Moissonneuse-batteuse (1) selon une des revendications 1 à 2, **caractérisée en ce que** les capteurs (34, 35) de la au moins une barrette de mesure (31) sont conformés en capteurs fonctionnant sans contact.

5. Moissonneuse-batteuse (1) selon une des revendications 1 à 2, **caractérisée en ce que** la barrette de mesure (31) comporte plusieurs segments (32) qui sont disposés côte à côte et constitués d'un matériau élastique en flexion et à chacun desquels est respectivement associé un capteur (34, 35) pour détecter la déformation du segment respectif (32).

6. Moissonneuse-batteuse (1) selon une des revendications 1 à 5, **caractérisée en ce que** la moissonneuse-batteuse (1) comprend au moins un équipement de régulation et de commande (50) qui reçoit et analyse des signaux générés par les capteurs (34, 35) de la au moins une barrette de mesure (31).

7. Moissonneuse-batteuse (1) selon la revendication 6, **caractérisée en ce que** l'équipement de régulation et de commande (50) est agencé pour commander des actionneurs se trouvant dans le dispositif de ramassage (2).

8. Moissonneuse-batteuse (1) selon une des revendications 6 ou 7, **caractérisée en ce que** l'équipement de régulation et de commande (50) est agencé pour commander des actionneurs entraînant le convoyeur incliné (3).

9. Moissonneuse-batteuse (1) selon une des revendications 6 à 8, **caractérisée en ce que** l'équipement de régulation et de commande (50) est agencé pour commander des actionneurs entraînant l'équipement de battage (4).

10. Moissonneuse-batteuse (1) selon une des revendications 6 à 9, **caractérisée en ce que** l'équipement de régulation et de commande (50) est agencé pour modifier la largeur de l'interstice de battage (17) en fonction de la répartition du produit de récolte.

11. Procédé pour opérer une moissonneuse-batteuse (1) selon une des revendications 1 à 10, comprenant un dispositif de ramassage (2) pour du produit récolté, lequel peut être monté sur un convoyeur incliné (3) de la moissonneuse-batteuse (1), ainsi que comprenant un équipement de battage (4) avec un premier batteur (5) et un second batteur (6), auquel le produit récolté ramassé par le dispositif de ramassage (2) est amené, la répartition du produit récolté sur la largeur de l'équipement de battage (4) étant détectée au moyen d'au moins une barrette de mesure (31) qui est disposée en amont du premier batteur (5) de l'équipement de battage (4), qui s'étend sur la largeur de l'équipement de battage (4) et qui comprend plusieurs capteurs (34, 35), la barrette de mesure (31) étant disposée devant un premier contre-batteur (8) entourant par endroits le premier batteur (5) conformé en tambour de pré-accélération, et les signaux générés par les capteurs (34, 35) étant transférés pour analyse à au moins un équipement de régulation et de commande (50), et en ce que le au moins un équipement de régulation et de commande (50) permet d'actionner des actionneurs qui servent au fonctionnement du dispositif de ramassage (2), du convoyeur incliné (3) et de l'équipement de battage (4), **caractérisé en ce que** la barrette de mesure (31) est disposée au-dessous du premier batteur (5).

12. Procédé selon la revendication 11, **caractérisé en ce que** l'équipement de régulation et de commande (50) permet de commander ou de réguler les paramètres de travail d'organes de travail disposés en aval de l'équipement de battage (4) en fonction de la répartition du produit récolté détectée dans l'équipement de battage (4).

13. Procédé selon la revendication 12, **caractérisé en ce que** les organes de travail disposés en aval de l'équipement de battage (4) qui sont commandé ou régulés sont un dispositif de séparation (9), un ventilateur (14), un équipement de nettoyage (11) ainsi qu'un équipement d'épandage de produit récolté apte à évacuer du produit récolté sur le sol.
